# EUROPEAN PATENT SPECIFICATION

(11) **EP 1 020 536 B1**
(45) Date of publication and mention of the grant of the patent: **07.10.2009**
(21) Application number: 00400078.2
(22) Date of filing: 13.01.2000
(51) Int. Cl.: C21D 9/00, F16B 25/00, F16B 35/00

(54) **Screws having selected heat treatment and hardening**
Schrauben mit ausgewählter Wärmebehandlung und Härtung
Vis avec traitement thermique et durcissement sélectionné

(30) Priority: 13.01.1999 US 229435
(43) Date of publication of application: 19.07.2000
(73) Proprietor: ILLINOIS TOOL WORKS INC., Glenview, Cook County, Illinois 60025 (US)
(72) Inventor: Bauer, Mark D., Mount Prospect, Illinois 60056 (US); Spring, William A., Geneva, Illinois 60134 (US); Starozhitsky, Michael, Grove, Illinois 60089 (US); Ulhasan, Riaz S., Palatine, Illinois 60067 (US)
(74) Representative: Bloch, Gérard

(56) References cited:
- EP-A- 0 563 826
- DE-C- 684 060
- GB-A- 502 152
- US-A- 2 086 801
- US-A- 4 730 970
- US-A- 5 605 423
- US-A- 5 755 542

## Description

### FIELD OF THE INVENTION

This invention relates to carbon steel screws and similar fasteners having selectively hardened portions to create desired properties and behavior, and a method for making the selectively hardened screws.

### BACKGROUND OF THE INVENTION

Stainless steel screws having selectively hardened regions are known from U.S. Patent 3,376,780, which discloses a stainless steel screw having selectively hardened screw flight crests and a selectively hardened head region for insertion of a screwdriver. These regions are harder than the remaining portions of the screw. The stainless steel screw has a carbon content not exceeding 0.20 % by weight, a chromium content of 10-25 % by weight, a nickel content of 5-20 % by weight, a copper content of 1-5 % by weight, and an aluminum content of 0.25-2.5 % by weight. The hardening is accomplished by cold-working the stainless steel at about 350°-500° C, and by age-hardening at about 550°-700° C. The hardening is the greatest in the regions of the greatest cold-working.

U.S. Patent 4,295,351 discloses a stainless steel screw whose flight crests have been selectively hardened. The selective hardening is achieved by aggressive cold-working of the precursor fastener blanks, at sub-zero temperatures, during formation of the threads. Another selectively hardened stainless steel screw is disclosed in U.S. Patent 4,289,006.

U.S. Patent 2,229,565, discloses a socket screw whose head portion is selectively hardened. The head portion of the screw is rapidly heated by induction to an elevated temperature. The entire screw is then quenched, causing hardening of the heated portion. The resulting screw may have a Rockwell "C" hardness ("R*_{C}*") of about 48-50 in the head region, and a lower R*_{C}* of about 30-35 in the remaining portions.

U.S. Patent 5, 755, 542 discloses a screw having selectively hardened threads at a lower end of the screw shank, and a selectively hardened tip. U.S. Patent 5,605,423 discloses a stud having selectively hardened threads at a lower end of the stud, and a selectively hardened tip.

Certain standard carbon steel screws (having a single slot in the head) and cross-recessed screws (having two slots in the head which cross each other) can only be exposed to a limited driving torque from a driving tool (e.g. screwdriver). When the head slots are exposed to excessive turning force, the slots become enlarged and damaged, so that the driving tool can no longer effectively engage the slots.

Consideration has been given to hardening the head portion of screws to strengthen the slots. However, the hardening can cause the head and upper shank portion to become excessively brittle, resulting in 1) the head breaking from the screw shaft when excessive turning force is applied, 2) hydrogen embrittlement if the screws are plated, and 3) head-popping caused by thermal expansion and contraction of the substrate(s) to which the screw is applied, which creates stress that cannot be relieved by screw elongation. Also, selective heating of the head portion to cause hardening can result in distortion of the screw when the entire screw (having a varying temperature profile) is exposed to a quenching fluid.

### SUMMARY OF THE INVENTION

The present invention is directed to a selectively hardened carbon steel screw of either one of claims 1,4 and 7.

### BRIEF DESCRIPTION OF THE DRAWINGS

Fig. 1 is a sectional view of a screw of the invention having selected hardening in the head region.
Fig. 2 is a top view of the screw of Fig. 1.
Fig. 3 is a top view of another embodiment of the screw of the invention.
Fig. 4 illustrates a drill point screw which can be selectively hardened according to the invention.
Fig. 5 illustrates a hex-head screw which can be selectively hardened according to the invention.
Fig. 6 is a schematic view of a heating apparatus for making selectively hardened screws.
Figs. 7-11 are sectional views taken along lines 7-7, 8-8, 9-9, 10-10, and 11-11 in Fig. 6.

### DETAILED DESCRIPTION OF THE

### PRESENTLY PREFERRED EMBODIMENTS

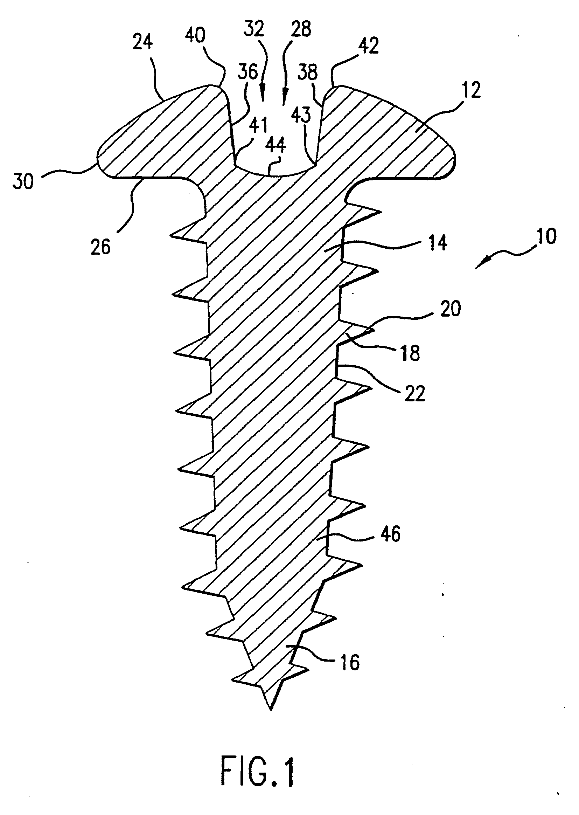

Referring to Fig. 1, a carbon steel screw 10 of the invention has a head portion 12, a shank 14 below the head, and a screw tip 16 at an end 46 of the shank opposite the head. A plurality of screw flights or threads 18 having peaks 20 and valleys 22 between them, wind around the outer rim of the shank 14 and tip 16.

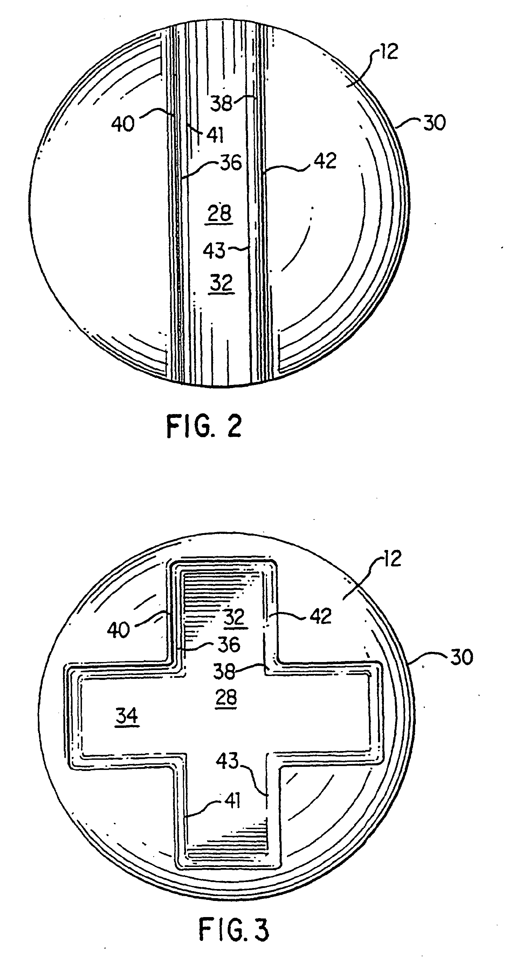

Referring to Figs. 1-3, the head portion 12 has a top surface 24, a bottom 26, a center region 28, and an outer rim 30. The center region 28 includes a recess, either a single slot 32 for receiving a standard screwdriver or similar tool, or a pair of intersecting slots 32 and 34 receiving a Phillips^{™} screwdriver or similar tool designed for cross-recessed screws.

Each slot is defined by a pair of opposing, generally upright walls 36 and 38 which intersect the top surface 24 at ridges 40 and 42, and which also intersect the slot floor 44 at junctions 41 and 43. The slot depth is the distance between ridges 40 and 42 and slot floor 44. The slot floor 44 may actually be located below the screw head 12 and in the adjacent shank 14, indicating a slot depth greater than the thickness of the screw head as shown in Fig. 1. Alternatively, the slot floor 44 may be about even with the bottom 26 of head 12, or may be above the bottom 26 of head 12, in which case the slot 32 (or slots 32 and 34) are located entirely within the head portion 12.

The screws 10 of the invention are selectively hardened to create a differential hardness profile within the head portion 12. A flame jet or other source of heat is applied directly to the upper surface 24 in the vicinity of center region 28, so that the heating is greatest at the highest points near the center, namely the ridges 40 and 42 of the slot 32 (or slots 32 and 34). The ridges 40 and 42 are heated to a temperature of at least about 700°C, preferably about 800°C-1100°C, more preferably about 850°-1000°C. The heating causes the affected portions (on and around ridges 40 and 42) to transform from a ferritic perlitic metallurgical structure to an austenitic metallurgical structure. The heating is sufficiently directed, and for a short enough period of time, that the bottom 26 of head 12 and adjacent portion of shaft 14 do not experience this transformation.

The screws 10 are then quenched by directing a quenching fluid to the portion of head 12 which experienced the greatest heating. The quenching fluid may be water or another liquid or gas, and may be poured, sprayed, sprayed with air assist, or otherwise applied directly to the upper surface 24 in the vicinity of the center region 28. The applied quenching fluid may then flow down over the head, so as to have a lesser quenching impact on portions of the screw which experienced less heating. The selective quenching causes the hottest portions (on and around ridges 40 and 42) to transform from the austenitic metallurgical structure to a martensitic structure, which is hardened but untempered. The bottom portion 26 of screw head 12, and the adjacent portion of shank 14, remain substantially in the ferritic perlitic state, which is softer and more pliable. By selectively quenching the hottest portion of the head 12 to a greater extent than the cooler portions, distortion of the screw due to quenching is minimized.

The quenching fluid may have a temperature of about 4°-100°C, preferably about 10°-70°C, more preferably about 15°-40°C. Tap water or other process water is suitable. Other quenching media may include oil or gas. The quench time need not be more than about 30 seconds, and may be about 3-10 seconds. The screw head may still be warm after quenching in order to facilitate drying.

The resulting selectively hardened carbon steel screw has a hardness differential of at least about 10 Rockwell "C" ("R*_{C}*") units within the head portion itself. The ridges 40 and 42 near the center of the head 12 should have an R*_{C}* of at least about 45, preferably at least about 50, more preferably at least about 55. The bottom 26 of the head 12, and the upper region of shank 14, should have an R*_{C}* no greater than about 35.

The remaining portions of screw head 12 may have an R*_{C}* value closer to the R*_{C}* of the ridges 40 and 42, or closer to the R*_{C}* of the bottom 26, depending on their proximity to either location. For instance, the walls 36 and 38 of slot 32 (or slots 32 and 34) should have an R*_{C}* of at least about 45 near the top and near the center, yet may have an R*_{C}* of about 35 or lower near the junctions 41 and 43 of the slot floor 44. The slot floor 44 may have an R*_{C}* of about 35 or less. The upper surface 24 may have an R*_{C}* of at least about 45 close to the ridges and close to the center, and may or may not have a lower R*_{C}* closer to the rim 30.

By selectively hardening the screw head 12 in this fashion, the slot 32 is provided with additional strength and hardness which reduces deformation and damage when a screwdriver or similar tool is applied at high torque. By allowing the bottom 26, head 12 and adjacent shank 14 to remain softer, the possibility of the head breaking away due to high torque or high shear stress is reduced. The invention is particularly useful for roofing screws, and other screws which have long shafts and/or which are driven into resistant substrates, because these screws are routinely subjected to high shear stress levels due to extreme temperature variations experienced on a roof.

The screw 10 should be constructed from a fairly low carbon steel. Suitable carbon contents range from about 0.18-0.35% by weight of the steel. The carbon should be sufficient to facilitate hardening of the steel by heat treatment, yet not high enough to facilitate work hardening during cold heading, pointing, or thread rolling of the screw. Put another way, the screw 10 of the invention is selectively heat hardened, and preferably, not work hardened.

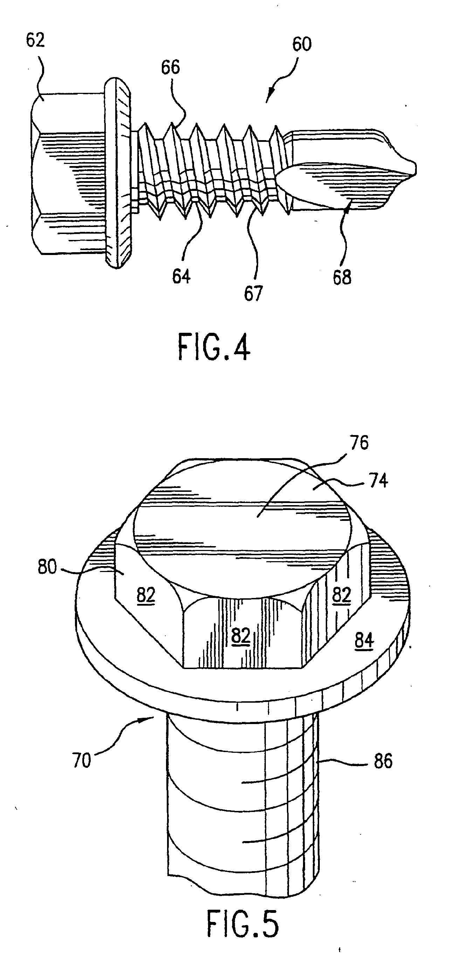

In another embodiment illustrated in Fig. 4, the selectively hardened screw of the invention may be a drill tip screw. One type of drill tip screw 60 includes a hexagonal head portion 62, a threaded shaft 64 including one or more spiral threads 66, and a drill point 68 which can be used to tap and drill at least a portion of the screw 60 into a substrate. The head portion 62 may be selectively hardened on its exterior faces using techniques described above for improved strength and integrity. Furthermore, the tip 68, and a portion 67 of shank 64 encompassing the first few threads 66 above the tip 68, may be selectively heat treated and hardened in order to facilitate initial penetration of the screw 60 into a substrate, and initial thread tapping. A roofing screw may be hardened at the tip and just above the tip, in order to overcome the need to drill a hole in the substrate to get the screw started.

Referring to Fig. 4, the end portion 67 of screw 60, defined as the lower region of shank 64 adjacent the tip, may be selectively hardened along with the tip 68 by initially applying a flame jet or other heat source directly to the end region 67 and tip 68. End region 67 and tip 68 are heated to at least about 700°C, preferably about 800°-1100°C, more preferably about 850°-1000°C. The selective heating causes end region 67 and tip 68 to change from a ferritic perlitic metallurgical structure to an austenitic metallurgical structure. Then, end region 67 and tip 68 are selectively quenched by dipping or directing a quenching fluid directly at them. The selective quenching (which causes even cooling around the screw, but differential quenching along its length) converts the austenitic metallurgical structure to a martensitic metallurgical structure in the heated region, which is untempered but hard. The quenching fluid may be water, and may be applied at the temperatures and quench times stated above for the head portion

The end regions 67 and tips 68 of screws 60 should be hardened to an R*_{C}* value of at least about 45, preferably at least about 50, more preferably at least about 55. The untreated region of shank 64 above end region 67 may have an R*_{C}* at least about 10 units lower than the hardened end region, and may have an R*_{C}* of about 35 or less, perhaps 25 or less.

The hardened region 67 of the shank may then be tempered to yield a hardness value R*_{C}* of between about 35-45, which is higher than the stating R*_{C}* value yet lower than the selectively hardened value. Tempering can be accomplished by reheating the selectively hardened region 67 to about 300°-600°C, preferably about 400°-550°C. Preferably, the tip 68 is not tempered, but is instead maintained at its maximum hardness. The spiral threads 66 may also be case hardened (i.e. hardened on their exterior) to reduce damage when the screw is driven into a substrate. This is particularly useful in the case of long drill screws used for roofing.

In another embodiment, the selectively hardened screw may be a hex-head screw having a hexagonal head portion for receiving a driving tool. Referring to Fig. 5, the screw 70 has a head 74, with a top surface 76. The head 74 also has a hexagonal outer surface 80 composed of six rectangular flat surfaces 82. In the embodiment shown, a permanent washer 84 is positioned between the head 74 and the elongated threaded shank 86 of the screw.

In accordance with the invention, selected portions of hex-head screw 70 may be hardened using the techniques described above. The top of head portion 72, which receives the driving tool, may be selectively hardened to provide better resistance to damage and wear. By hardening the six outer faces 82 of the head portion, the performance of the screw and driving tool can be enhanced due to improved interaction using a socket driving tool.

Again, the drill point screw of Fig. 4 and hex-head screw of Fig. 5 may be fabricated from carbon steel having carbon contents as described above. The non-hardened screw portions may have an R*_{C}* value of about 35 or less. The selectively hardened portions may have an R*_{C}* value of at least about 45, preferably at least about 50, more preferably, at least about 55.

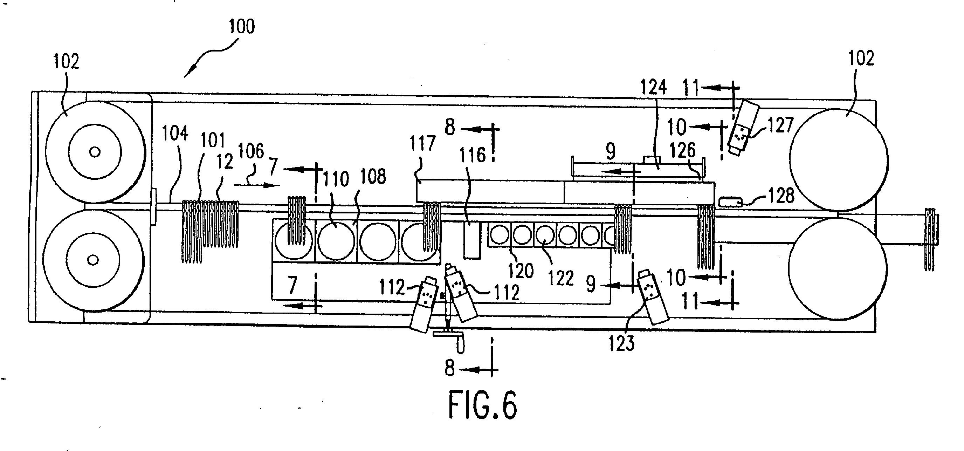

The head and end regions of screws may be selectively hardened separately, using different processes, or may be treated in a single integrated process. Figs. 6-11 schematically illustrate an apparatus 100 useful for heat treating selected portions of a large number of screws on a continuous basis. Referring to Fig. 6, apparatus 100 includes a transport mechanism 102 which cooperates with and moves a screw conveyor 104, which may be a link chain, in the direction of arrow 106. Screws 101, which can have a variety of lengths, are supported in the conveyor 104 below their respective head portions 12.

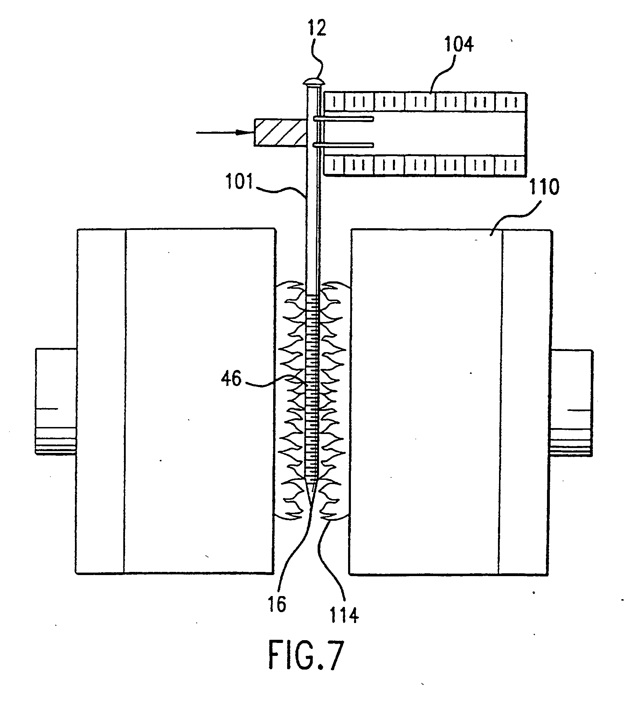

Screws 101 are carried on the conveyor 104 through a first heating assembly 108, which includes a plurality of flame burners 110 and thermocouples 112. As shown in Fig. 7, the flame burners 110 in assembly 108 are used to heat the lower end 46 and tip 16 of each screw 101, to a temperature most preferably between 850°-1000°C. The flame 114 is applied only to these selected screw portions. An exhaust hood 117 carries away excess heat.

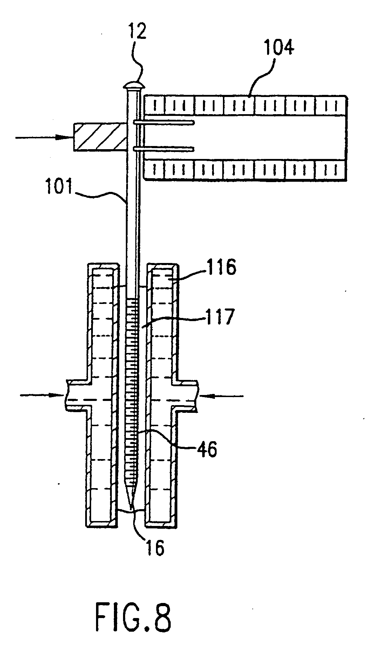

As the screws 101 are further conveyed beyond the first heating assembly 108, the lower end and tip of each screw 101 are then quenched using a cooling assembly 116. As illustrated in Fig. 8, the cooling assembly applies a water curtain 117, or process oil, or another cooling fluid selectively to the portions of each screw which have been heated. The heated portions are preferably cooled to 70°C or less.

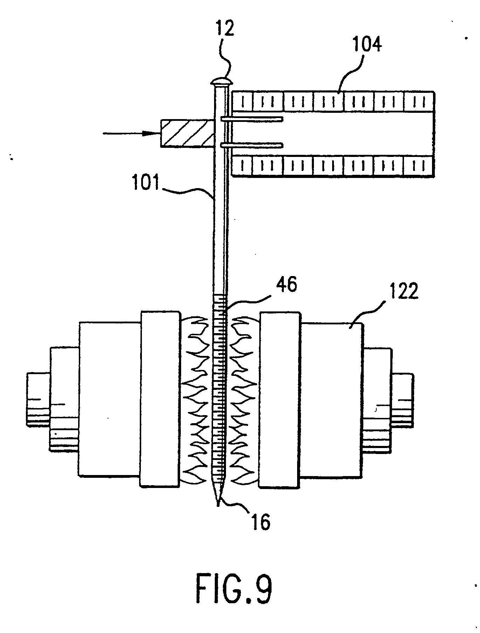

The first heating assembly, followed by cooling, may increase the Rockwell R*_{C}* hardness of the lower end and tip of each screw, from a starting value less than 35 (and perhaps less than 25) to a value of about 45 or higher (and perhaps 50 or higher). It may be desirable to soften the threads in the lower end to an intermediate hardness, while maintaining the high hardness of the screw tip. This softening, called "tempering", can be accomplished by passing the hardened thread portion 46 of each screw through a second heating assembly 120. The second heating assembly 120 may include a plurality of smaller flame burners 122 which, as shown in Fig. 9, heat only the lower end 46 of each screw, but not the screw tip, to a temperature of about 400°-550°C as determined by thermocouple sensor 123. This secondary heating step softens the lower portion 46 of each screw to an intermediate Rockwell R*_{C}* value of about 35-45.

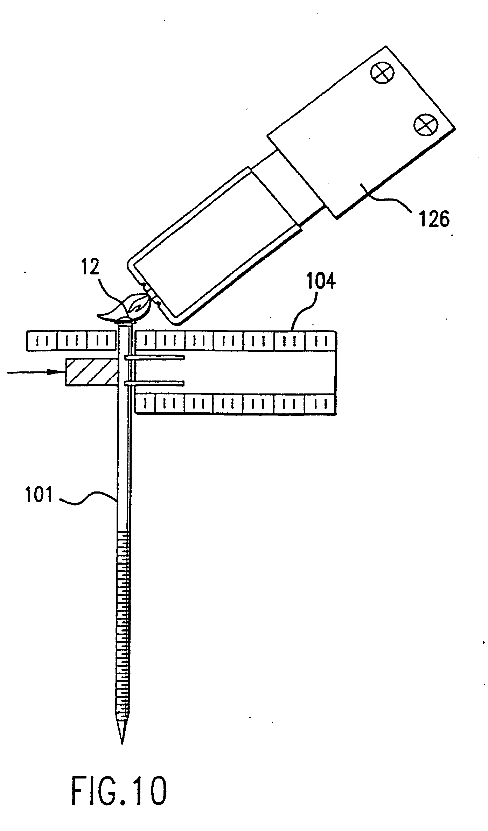

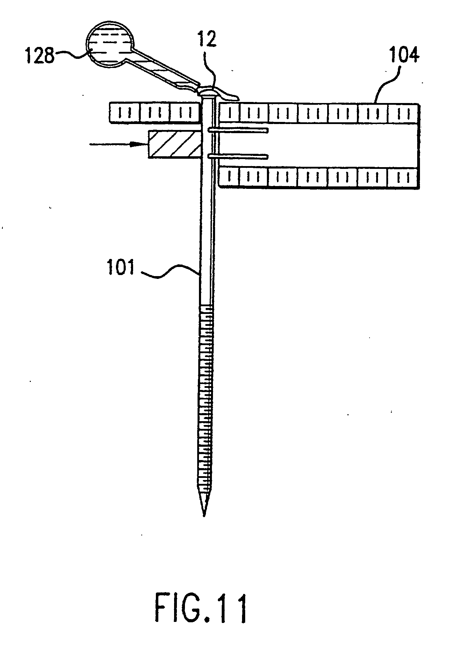

As the screws 101 are further conveyed, the head portions 12 are selectively heat treated using a third heating assembly 124 having one or more flame burners 126, and thermocouple 127. As shown in Fig. 10, the burners in the third heating assembly 124 aim the flame heat selectively toward the head portions 12. The head portions are most preferably heated to about 850°-1000°C. The head portions 12 are then selectively quenched using a cooling assembly 128 which, as shown in Fig. 11, directs water or another quenching fluid directly to the head portions 12. The head portions thus treated may have a Rockwell R*_{C}* hardness value of about 45 or higher, perhaps about 50 or higher. The screws 101 may then exit the apparatus 100 for packaging or other use.

## Claims

1. A selectively hardened cold heading grade low carbon steel screw, the carbon content ranging from about 0,18-0,35% by weight of steel, the screw comprising a screw head (12), a shank (14) having a first end adjacent the head (12) and a second end (46), and a screw tip (16) adjacent the second end (46), of the shank (14), the screw head (12) including a top surface (24), a bottom (26), a center region (28), an outer rim (30) and a recess (32, 34), in the center region (28), for receiving a driving tool;
the screw head (12) including an upper selectively flame hardened portion with a martensitic metallurgical structure on the top surface (24) in the center region (28), and a lower portion which has not been hardened, with a ferritic perlitic metallurgical structure on the bottom (26),
the shank (14) including an upper portion which has not been hardened, with a ferritic perlitic metallurgical structure at the first end and a martensitic metallurgical structure at the second end (46) which has en hardened, wherein the screw tip (16) is also selectively flame hardened, with a martensitic metallurgical structure.

2. The screw of claim 1, wherein the head (12) comprises a single slot (32) having a hardened upper portion.

3. The screw of claim 1, wherein the head (12) comprises two slots (32, 34) which cross each other, having hardened upper portions.

4. A selectively hardened cold heading grade low carbon steel drill tip screw, the carbon content ranging from about 0,18-0,35% by weight of steel, the screw comprising a screw head (62), a shank (64) having a first (66) end adjacent the head (62) and a second end (67), and a screw tip (68) adjacent the second end (67) of the shank (64);
the screw head (62) including an upper selectively flame hardened portion with a martensitic metallurgical structure on its exterior face and a lower portion which has not been hardened;
the shank (64) including an upper portion (66) which has not been hardened and a lower selectively hardened portion (67) adjacent the tip (68), wherein the screw tip is also selectively flame hardened second end (67) of the shank (64) and the tip (68) having a metallurgical structure.

5. The screw of claim 4, wherein the shank (64) comprises case hardened threads 66).

6. The screw of claim 4, wherein the head is a hex-head (62).

7. A selectively hardened cold heading grade low carbon steel hex-head screw, the carbon content ranging from about 0,18-0,35% by weight of steel, the screw comprising a screw head (74), a shank (86) having a first end adjacent the head and a second end, a screw tip adjacent the second end of the shank (86), and a permanent washer (84) between the screw head (74) and the shank (86);
the screw head (74) having a top surface (76) and outer faces (82) ;
the screw head (74) including an upper selectively flame hardened portion with hardened outer faces (82) and a lower portion which has not been hardened;
the shank (86) including an upper portion which has not been hardened, wherein the screw tip is also selectively flame hardened.

8. The screw of one of claims 1 to 7, wherein the selectively hardened screw tip (16; 68) has a Rockwell "C" hardness of at least about 45.

9. The screw of claim 8, wherein the Rockwell "C" hardness is at least about 50.

10. The screw of one of claims 1 to 9, wherein the selectively hardened portion (46; 67) of the shank (14; 64) has a Rockwell "C" hardness of about 35-45.

11. A selectively hardened carbon steel screw according to one of claims 1 to 10,
wherein a portion or portions of the screw are selectively hardened by heat treatment to an elevated temperature of at least about 700 °C, followed by quenching, to yield a Rockwell "C" hardness at least about 10 units higher than a remaining portion or portions of the screw not selectively hardened.

12. The screw of claim 1, wherein the elevated temperature is about 800°C-1100°C.

13. The screw of claim 12, wherein the elevated temperature is about 850°C-1000°C.

14. The screw of one of claims 1 to 13, wherein the selectively hardened portion or portions are selectively quenched.

15. The screw of one of claims 1 to 14, wherein the second end (46; of the shank (14; 64) is first selectively hardened and then tempered.

## Patentansprüche

1. Selektiv gehärtete Schraube aus kohlenstoffarmem Stahl und mit kaltgestauchtem Kopf, wobei der Kohlenstoffgehalt im Bereich von etwa 0,18 bis 0,35 Gewichts-% des Stahls liegt, wobei die Schraube einen Schraubenkopf (12), einen Schaft (14), der ein erstes Ende neben dem Kopf (12) und ein zweites Ende (46) hat, sowie eine Schraubenspitze (16) neben dem zweiten Ende (46) des Schaftes (14) aufweist, wobei der Schraubenkopf (12) eine Oberseite (24), eine Unterseite (26), eine mittige Region (28), einen äußeren Rand (30) und eine Ausnehmung (32, 34) in der mittigen Region (28) zur Aufnahme eines Antriebswerkzeugs enthält;
wobei der Schraubenkopf (12) einen oberen selektiv flammgehärteten Abschnitt mit einer martensitischen metallurgischen Struktur auf der Oberseite (24) in der mittigen Region (28) sowie einen unteren ungehärteten Abschnitt mit einer ferritischen perlitischen metallurgischen Struktur an der Unterseite (26) enthält;
wobei der Schaft (14) einen oberen ungehärteten Abschnitt mit einer ferritischen perlitischen metallurgischen Struktur an dem ersten Ende sowie eine martensitische metallurgische Struktur an dem zweiten Ende (46), das gehärtet ist, enthält, wobei die Schraubenspitze (16) ebenfalls selektiv flammgehärtet ist und eine martensitische metallurgische Struktur aufweist.

2. Schraube nach Anspruch 1, wobei der Kopf (12) einen einzelnen Schlitz (32) mit einem gehärteten oberen Abschnitt aufweist.

3. Schraube nach Anspruch 1, wobei der Kopf (12) zwei Schlitze (32, 34), die einander kreuzen, mit gehärteten oberen Abschnitten aufweist.

4. Selektiv gehärtete Schraube aus kohlenstoffarmem Stahl, mit kaltgestauchtem Kopf und mit Bohrspitze, wobei der Kohlenstoffgehalt im Bereich von etwa 0,18 bis 0,35 Gewichts-% des Stahls liegt,
wobei die Schraube einen Schraubenkopf (62), einen Schaft (64), der ein erstes Ende (66) neben dem Kopf (62) und ein zweites Ende (67) hat, sowie eine Schraubenspitze (68) neben dem zweiten Ende (67) des Schaftes (64) aufweist;
wobei der Schraubenkopf (62) einen oberen selektiv flammgehärteten Abschnitt mit einer martensitischen metallurgischen Struktur auf seiner Außenseite sowie einen unteren ungehärteten Abschnitt enthält;
wobei der Schaft (64) einen ungehärteten oberen Abschnitt (66) sowie einen unteren selektiv gehärteten Abschnitt (67) neben der Spitze (68) enthält, wobei die Schraubenspitze (68) ebenfalls selektiv flammgehärtet ist und das zweite Ende (67) des Schaftes (64) und die Spitze (68) eine metallurgische Struktur aufweisen.

5. Schraube nach Anspruch 4, wobei der Schaft (64) einsatzgehärtete Gewindegänge (66) aufweist.

6. Schraube nach Anspruch 4, wobei der Kopf ein Sechskantkopf (62) ist.

7. Selektiv gehärtete Schraube aus kohlenstoffarmem Stahl, mit kaltgestauchtem Kopf und mit Sechskantkopf, wobei der Kohlenstoffgehalt im Bereich von etwa 0,18 bis 0,35 Gewichts-% des Stahls liegt,
wobei die Schraube einen Schraubenkopf (74), einen Schaft (86), der ein erstes Ende neben dem Kopf und ein zweites Ende hat, sowie eine Schraubenspitze neben dem zweiten Ende des Schaftes (86) aufweist, wobei eine dauerhafte Scheibe (84) zwischen dem Schraubenkopf (74) und dem Schaft (86) angeordnet ist;
wobei der Schraubenkopf (74) eine Oberseite (76) und Außenseiten (82) aufweist;
wobei der Schraubenkopf (74) einen oberen selektiv flammgehärteten Abschnitt mit gehärteten Außenseiten (82) und einen unteren ungehärteten Abschnitt enthält;
wobei der Schaft (86) einen oberen ungehärteten Abschnitt enthält, wobei die Schraubenspitze ebenfalls selektiv flammgehärtet ist.

8. Schraube nach einem der Ansprüche 1 bis 7, wobei die selektiv gehärtete Schraubenspitze (16; 68) eine Rockwell-C-Härte von wenigstens etwa 45 aufweist.

9. Schraube nach Anspruch 8, wobei die Rockwell-C-Härte wenigstens etwa 50 beträgt.

10. Schraube nach einem der Ansprüche 1 bis 9, wobei der selektiv gehärtete Abschnitt (46; 67) des Schafts (14; 64) eine Rockwell-C-Härte von etwa 35-45 aufweist.

11. Selektiv gehärtete Schraube aus Kohlenstoffstahl nach einem der Ansprüche 1 bis 10,
wobei ein oder mehrere Abschnitte der Schraube durch Wärmebehandlung auf eine erhöhte Temperatur von wenigstens etwa 700°C mit anschließendem Abschrecken selektiv auf eine Rockwell-C-Härte gehärtet sind, die wenigstens etwa 10 Einheiten über dem übrigen Abschnitt oder den übrigen Abschnitten der Schraube, die nicht selektiv gehärtet sind, liegt.

12. Schraube nach Anspruch 1, wobei die erhöhte Temperatur etwa 800°C bis 1100°C beträgt.

13. Schraube nach Anspruch 12, wobei die erhöhte Temperatur etwa 850°C bis 1000°C beträgt.

14. Schraube nach einem der Ansprüche 1 bis 13, wobei der oder die selektiv gehärteten Abschnitte selektiv abgeschreckt werden.

15. Schraube nach einem der Ansprüche 1 bis 14, wobei das zweite Ende (46; 67) des Schaftes (14; 64) zuerst selektiv gehärtet und anschließend getempert wird.

## Revendications

1. Vis en acier à bas carbone de qualité pour formage à froid, durcie de façon sélective, la teneur en carbone allant d'environ 0,18 à 0,35% en poids d'acier, la vis comprenant une tête de vis (12), une tige (14) qui a une première extrémité adjacente à la tête (12) et une deuxième extrémité (46), et une pointe de vis (16) adjacente à la deuxième extrémité (46) de la tige (14), la tête de vis (12) comprenant une surface supérieure (24), une surface inférieure (26), une région centrale (28), une couronne extérieure (30) et une empreinte (32, 34) dans la région centrale (28) pour recevoir un outil d'entraînement;
la tête de vis (12) comprenant une partie supérieure durcie à la flamme de façon sélective, avec une structure métallurgique martensitique à la surface supérieure (24) dans la région centrale (28), et une partie inférieure qui n'a pas été durcie, avec une structure métallurgique ferritique perlitique sur la partie inférieure (26),
la tige (14) comprenant une partie supérieure qui n'a pas été durcie, avec une structure métallurgique ferritique perlitique à la première extrémité, et une structure métallurgique martensitique à la deuxième extrémité (46) qui a été durcie, dans laquelle la pointe de vis (16) est également durcie à la flamme de façon sélective, avec une structure métallurgique martensitique.

2. Vis selon la revendication 1, dans laquelle la tête (12) comprend une fente unique (32) qui a une partie supérieure durcie.

3. Vis selon la revendication 1, dans laquelle la tête (12) comprend deux fentes (32, 34) qui se croisent l'une l'autre, qui ont des parties supérieures durcies.

4. Vis à pointe autoforante en acier à bas carbone de qualité pour formage à froid, durcie de façon sélective, la teneur en carbone allant d'environ 0,18 à 0,35 % en poids d'acier, les vis comprenant une tête de vis (62), une tige (64) qui a une première extrémité (66) adjacente à la tête (62) et une deuxième extrémité (67), et une pointe de vis (68) adjacente à la deuxième extrémité (67) de la tige (64);
la tête de vis (62) comprenant une partie supérieure durcie à la flamme de façon sélective, avec une structure métallurgique martensitique à sa surface extérieure et une partie inférieure qui n'a pas été durcie,
la tige (64) comprenant une partie supérieure (66) qui n'a pas été durcie et une partie inférieure (67) durcie de façon sélective adjacente à la pointe (68), dans laquelle la pointe de vis (68) est également durcie à la flamme de façon sélective, la deuxième extrémité (67) de la tige (64) et la pointe (68) ayant une structure métallurgique.

5. Vis selon la revendication 4, dans laquelle la tige (64) comprend des filets cémentés (66).

6. Vis selon la revendication 4, dans laquelle la tête est une tête hexagonale (62).

7. Vis à tête hexagonale en acier à bas carbone de qualité pour formage à froid, durcie de façon sélective, la teneur en carbone allant d'environ 0,18 à 0,35 % en poids d'acier, les vis comprenant une tête de vis (74), une tige (86) qui a une première extrémité adjacente à la tête et une deuxième extrémité, une pointe de vis adjacente à la deuxième extrémité de la tige (86) et une rondelle permanente (84) entre la tête de vis (74) et la tige (86) ;
la tête de vis (74) ayant une surface supérieure (76) et des faces extérieures (82);
la tête de vis (74) comprenant une partie supérieure durcie à la flamme de façon sélective avec des faces extérieures durcies (82) et une partie inférieure qui n'a pas été durcie;
la tige (86) comprenant une partie supérieure qui n'a pas été durcie, dans laquelle la pointe de vis est également durcie à la flamme de façon sélective.

8. Vis selon une des revendications 1 à 7, dans laquelle la pointe de vis durcie de façon sélective (16, 68) a une dureté Rockwell "C" d'au moins environ 45.

9. Vis selon la revendication 8, dans laquelle la dureté Rockwell "C" est d'au moins environ 50.

10. Vis selon une des revendications 1 à 9, dans laquelle la partie durcie de façon sélective (46, 67) de la tige (14, 64) a une dureté Rockwell "C" d'environ 35 à 45.

11. Vis en acier au carbone durcie de façon sélective selon une des revendications 1 à 10,
dans laquelle une partie ou des parties de la vis sont durcies de façon sélective par traitement thermique à une température élevée d'au moins environ 700°C, suivi d'une trempe, pour donner une dureté Rockwell "C" d'au moins environ 10 unités plus élevée qu'une ou des partie(s) restante(s) de la vis non durcie(s) de façon sélective.

12. Vis selon la revendication 1, dans laquelle la température élevée est d'environ 800°C à 1100°C.

13. Vis selon la revendication 12, dans laquelle la température élevée est d'environ 850°C à 1000°C.

14. Vis selon une des revendications 1 à 13, dans laquelle la (les) partie(s) durcie(s) de façon sélective est (sont) trempée(s) de façon sélective.

15. Vis selon une des revendications 1 à 14, dans laquelle la deuxième extrémité (46, 67) de la tige (14, 64) est d'abord durcie de façon sélective et ensuite revenue.
